# EUROPEAN PATENT APPLICATION

(11) **EP 2 693 340 A1**
(43) Date of publication of application: **05.02.2014**
(21) Application number: 11862686.0
(22) Date of filing: 25.08.2011
(51) Int. Cl.: G06F 12/00, G06F 9/46

(54) **INFORMATION PROCESSING SYSTEM, BACKUP MANAGEMENT METHOD AND PROGRAM**

(30) Priority: 31.03.2011 JP 2011078523
(71) Applicant: Hitachi Solutions, Ltd., Tokyo 140-0002 (JP)
(72) Inventor: KIRIHATA Yasuhiro, Tokyo 140-0002 (JP)
(74) Representative: Grosse, Rainer
(86) International application number: PCT/JP2011/069130
(87) International publication number: WO 2012/132046

(57) **Abstract**

Provided is a technology of allowing a search for specific data included in a virtual machine image that has been backed up, without activating the virtual machine image. In the present invention, at least one virtual machine image is mounted from a repository of virtual machine images that have been backed up, so that a file included in the virtual machine image can be searched for without the virtual machine image being activated. In addition, the present invention implements a function of adequately performing backup management as well as archiving by detecting a file that contains mail data to be archived or specific information such as personal information, and automatically performing a process of, for example, archiving, moving, or deleting the data from the virtual machine image in accordance with a policy (see Fig. 1).

## Description

### Technical Field

The present invention relates to an information processing system, a backup management method, and a program, and for example, relates to a technology for managing backup data of a virtual machine.

### Background Art

With the advent of the cloud computing, enterprises have emerged that conduct IaaS operations to provide virtual environments over the Internet, such as Amazon Web Services and Rackspace. In response, there has been an increasing demand for a private cloud that constructs a cloud environment on a premise to provide in-house services.

When a private cloud is constructed, a virtual environment such as VMware, Xen, or Hyper-V is typically adopted as a back-end server environment that operates in the data center. However, how to back up data and manage the backed-up data in such a virtual environment are important tasks to be addressed.

The mainstream method to address such tasks is to introduce a backup agent into each virtual machine so that the agent will acquire a backup of specified data and send the backup to a backup media server over a network, and then copy the data from the media server to a backup device such as a tape library or an offline storage. There is also known a method of acquiring a snapshot of a volume, which has a virtual server stored therein, using a snapshot function of a storage, and then backing up a virtual machine image of the virtual server as is. The advantage of the latter method over the former method is that a backup can be acquired without a backup agent installed on each virtual server. It is expected that the latter method of backing up a virtual machine image as is will be increasingly used in cloud environments.

With regard to a backup of a virtual machine image, for example, Patent Literature 1 implements a method of, for a highly-available system whose server system includes an active server and a standby server, installing a virtual server that performs a process of synchronizing with the standby server, and causing the standby server and the virtual server to synchronize with each other in conjunction with a synchronization process between the active server and the standby server. Then, in a state in which a synchronization process between the standby server and the active server as well as a synchronization process between the standby server and the virtual server is stopped, a method of backing up a whole virtual machine image of the virtual server is implemented.

### Citation List

### Patent Literature

Patent Literature 1: JP 2010-231257 A

### Summary of Invention

### Technical Problem

As described above, Patent Literature 1 implements a mechanism of backing up a whole virtual machine image. However, Patent Literature 1 does not implement, as a function of managing the backup data, a search for a group of files that are included in the image data. For example, when a specific file or a virtual server is to be recovered using the backup data, it would be necessary to search through files in the virtual machine or the system configuration thereof. However, with the existing technologies including the technology of Patent Literature 1, such a function has not been implemented. At present, a search can be conducted only after the backup data is activated.

Further, there is a possibility that a virtual machine image that has been backed up may include data that should not be copied as a backup such as, for example, data to be separately archived like mail data, personal information, or confidential business information related to other companies. For such data, it would also be necessary to provide a function of detecting the data as well as moving the data to an archiving storage or deleting the data from the backup data in accordance with a policy. However, such a function has not been implemented so far.

The present invention has been made in view of the foregoing circumstances, and provides a technology of allowing a search for specific data included in a virtual machine image that has been backed up, without activating the virtual machine image.

### Solution to Problem

In order to solve the aforementioned problems, in the present invention, at least one virtual machine image is mounted from a repository of virtual machine images that have been backed up, so that a file included in the virtual machine image can be searched for without the virtual machine image being activated.

In addition, the present invention implements a function of adequately performing backup management as well as archiving by detecting a file that contains mail data to be archived or specific information such as personal information, and automatically performing a process of, for example, archiving, moving, or deleting the data from the virtual machine image in accordance with a policy.

Further, in the present invention, a crawling scheme is implemented that efficiently creates a search index, taking into consideration the redundancy of backup data and the data redundancy of a system file of an OS that is included in a virtual machine image, for example.

That is, the present invention provides an information processing system that manages backups of virtual machine images. The information processing system includes a virtual machine repository having stored therein virtual machine images that have been backed up; a virtual machine mounting processing unit configured to back up virtual machine images of a virtual server, copy the virtual machine images to the virtual machine repository, and mount at least one of the virtual machine images stored in the virtual machine repository; and a crawling processing unit configured to execute a crawling process to create a file search index by accessing the mounted virtual machine image.

Further features related to the present invention will be apparent from the description of this specification and the accompanying drawings. The embodiments of the present invention can be accomplished and implemented by elements, a combination of various elements, the following detailed description, and the scope of the appended claims.

The description of this specification merely illustrates typical examples. Thus, it should be appreciated that the scope of the claims and examples of the application of the present invention should not be limited in any sense.

### Advantageous Effects of Invention

The present invention allows a search for specific data included in a virtual machine image that has been backed up, without activating the virtual machine image.

### Brief Description of Drawings

Fig. 1 is a diagram showing the schematic configuration of an information processing system in accordance with an embodiment of the present invention;
Fig. 2 is a diagram showing an exemplary structure of an archiving management DB;
Fig. 3 is a diagram showing an exemplary structure of a duplicate management DB;
Fig. 4 is a diagram showing an exemplary structure of a document management table in a search index;
Fig. 5 is a diagram showing an exemplary structure of an inverted index table in a search index;
Fig. 6 is a flowchart illustrating a process of a virtual machine mounting module performed at the time of crawling;
Fig. 7 is a flowchart illustrating a process of a crawling service performed at the time of crawling;
Fig. 8 is a flowchart illustrating a process of acquiring data and registering the data in a search engine; and
Fig. 9 is a flowchart illustrating processing of files performed by a backup management service in accordance with a policy.

### Description of Embodiments

The present invention relates to a technology of implementing a function of performing a keyword search for virtual image files, which include the target file to be extracted, among virtual machine images that have been backed up, without activating the backed-up virtual machine images, to detect virtual image files that include the target file.

Hereinafter, embodiments of the present invention will be described with reference to the accompanying drawings. In the accompanying drawings, elements that have the same function may be denoted by the same reference numerals. Although the accompanying drawings illustrate specific embodiments and implementation examples in accordance with the principle of the present invention, such drawings are intended to merely help understand the present invention, and should not be used to construe the present invention in a limited way.

Although this embodiment contains fully detailed explanations for those skilled in the art to carry out the present invention, it should be appreciated that other implementations and embodiments are possible, and changes in the configuration or structure and replacement of various elements are possible in so far as they are within the scope of the technical idea and the spirit of the present invention. Thus, the following descriptions should not be construed in a limited way.

Further, as described below, the embodiment of the present invention may be implemented by any of software that runs on a general purpose computer, dedicated hardware, or a combination of both.

Although the following description illustrates each piece of information of the present invention in a "table" form, such information need not necessarily be represented by the data structure of a table, and may be represented by the data structure of a list, DB, queue, or the like, or other structures. Therefore, in order to show that each piece of information of the present invention does not depend on its data structure, a "table," "list," "DB," "queue," and the like may be simply referred to as "information."

In addition, in describing the content of each information, an expression such as "identification information," "identifier," "name," "appellation," or "ID" can be used, and such expressions are interchangeable.

In the following description, each process in the embodiment of the present invention is performed by a "service," an "engine," or the like, each of which is a program, as a subject (a subject that performs the operation). However, as a program performs a determined process using a memory and a communication port (a communication control device) by being executed by a processor, each process may also be described as being performed by a processor as a subject. Further, a process that is disclosed as being performed by a program as a subject may be a process that is performed by a computer such as a management server or an information processing device. Some or all of programs may be implemented by dedicated hardware, or may be implemented as modules. Each program may be installed on each computer by a program distribution server or a storage medium. Further, a processing unit indicated as a "module" can also be implemented as a program. That is, a program and a module are interchangeable.

### <System Configuration>

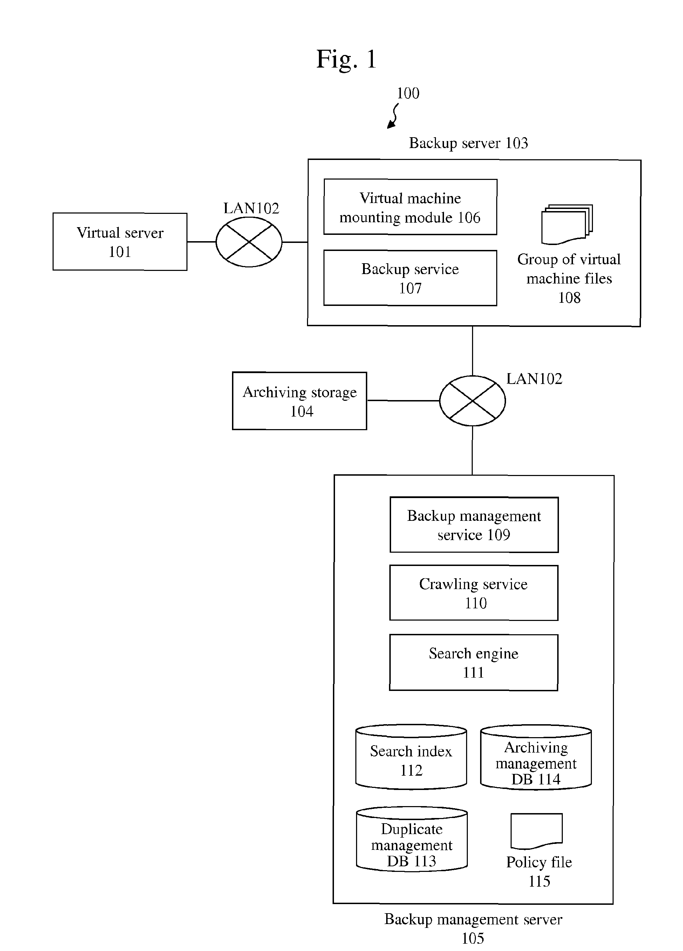

Fig. 1 is a diagram showing the schematic configuration of a backup management system (also referred to as a computer system or an information processing system) in accordance with an embodiment of the present invention. A backup management system 100 includes a virtual server 101, a backup server 103, an archiving storage 104, and a backup management server 105. The virtual server 101 and the backup server 103 are connected over a LAN 102, and the backup server 103, the backup management server 105, and the archiving storage 104 are connected over another LAN 102. Though not shown in Fig. 1, each of the virtual server 101, the backup server 103, and the backup management server 105 is an ordinary computer including a CPU (a processor), a memory, a display device, and the like. Each module and program are stored in the memory, and are executed by the CPU.

Such a network configuration allows the backup management server 105 to perform a crawling process for search purposes, a data archiving process, or the like on the backup server 103 without interfering with the data communication executed by a backup process of the backup server 103.

### (i) Virtual Server

The virtual server 101 is an ordinary computer including a CPU (a processor), which is not shown, a memory, a display device, and the like, so that a virtual environment such as VMware, Hyper-V, or Xen is constructed. Thus, a plurality of file servers or mail servers, virtual clients to be connected to thin clients intended for personal use, and the like can be operated on the virtual environment.

### (ii) Backup Server

The backup server 103 is a server for backing up and storing virtual machines that are operating on the virtual server 101, and has a group of virtual machine files (also called a group of virtual machine images or a repository of virtual machine images) 108 that have been backed up. In addition, the backup server 103 has installed and operating thereon a backup service 107 and a virtual machine mounting module 106.

The backup service 107 is a service (a program) for accessing the virtual server 101 and copying a specified virtual machine image, which is operating, to the group of virtual machine files 108 in the backup server 103.

Meanwhile, the virtual machine mounting module 106 has a function of, in response to a request from a crawling service 110 in the backup management server 105, mounting a virtual machine image and allowing the virtual machine image to be referenced without activating the image, and also has a function of computing a hash value of a specified file and notifying the crawling servicer 110 of the hash value. Using the noticed hash value, the crawling service 110 checks a duplicate management DB 113 to determine if the file has already been registered in a search engine 111, and, if the file has been registered, does not perform a data downloading process, and acquires only the meta information thereon, and then performs a duplicating process using an entry of the same content in the search engine 111.

### (iii) Backup Management Server

The backup management server 105 includes a backup management service 109, the crawling service 110, the search engine 111, a search index 112, the duplicate management DB 113, an archiving management DB 114, and a policy file 115.

The backup management service 109 provides a GUI for a user to use a function of managing the backup data, so that the user will be able to use the service to search the backup data for a file or set a policy about a file for data management. Examples of a policy about a file include a management policy about sensitive data (also referred to as confidential information) such as personal information or confidential business information related to other companies. When such a policy is set, the backup management service 109 detects a group of files that contain sensitive data at the time of crawling, registers them in the search index 112, and performs a process of deleting the sensitive data from the backup data (the group of virtual machine files 108) or migrating the sensitive data to a specific secure storage system at given timing. Other examples of the policy include an archiving policy for separately archiving data such as accounting data, business document data, or mail data that is stored in a file server or a mail server, for example. When such a policy is set, the backup management service 109 detects accounting data, document data, or mail data from the backup data, and copies the data to the archiving storage 104 after eliminating duplicate data. Such content identification is executed at the time of crawling, and the result of the identification is recorded on the search index 112. The crawling service 110 has a function of identifying such sensitive data, special format data to be archived, and the like, but the identification technology in the present invention is not specifically limited. Examples of known identification technology include keyword detection of personal information such as a postal address or a phone number, identification based on image matching to a document template, detection that uses meta information representing an attribute of content provided to a file, and identification of a file type based on a file extension or header information. In the present invention, such existing technologies may also be used in combination.

The crawling service 110 has, in addition to such content identification function, a crawling processing function of, by operating in conjunction with the virtual machine mounting module 106, accessing a mounted file of the group of virtual machine files 108 on the backup server 103, and creating a search index related to the group of files in the backup server 103.

The search engine 111 provides a function of allowing a user to search for data registered by the crawling service 110 and a function of creating the search index 112. As the search function, Lucene, Senna, or the like is well known as an open-source search engine. The search engine 111 can acquire files containing a desired keyword and the like by searching through the search index 112, and displays the search results as appropriate on a display screen of a display device. Then, it becomes possible for the user to select and view a desired file from among the search results, or move the file to the archiving storage 104 via the backup management service 109, for example.

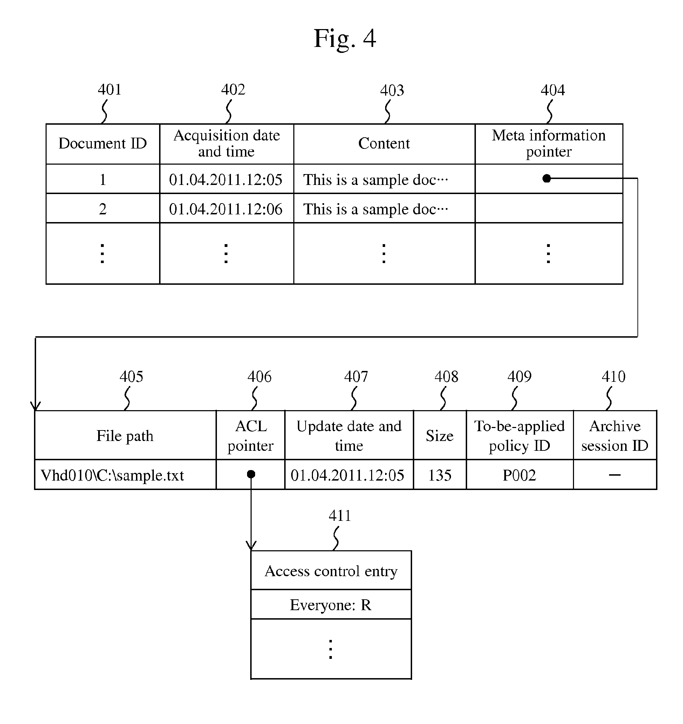

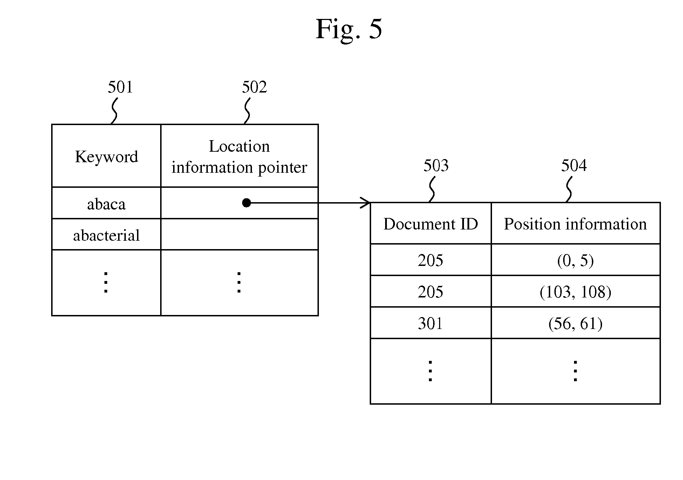

The search index 112 is a database used by the search engine 111, and holds a document management table (see Fig. 4) for managing the registered content, and an inverted index table (see Fig. 5) used for a keyword search.

The duplicate management DB 113 is a database for, when registration in the search engine 111 is performed by the crawling service 110, determining if the target file to be registered has already been registered in the search engine 111.

The archiving management DB 114 is a database for managing the data archived by the backup management service 109. The archiving management DB 114 is updated when the target data to be archived are extracted from the group of virtual machine files via the virtual machine mounting module 106 and compressed (in a batch) and stored in the archiving storage 104. In addition, the archiving management DB 114 is also used to, when the archived data is searched for via the backup management service 109 using the search engine 111, acquire the location information on the file.

The policy file 115 is a file that has held therein setting information about the aforementioned file management policy.

Although the backup server 103 and the backup management server 105 are configured as separate computers in this embodiment, the two servers may be implemented in a single computer.

### <Archiving Management DB>

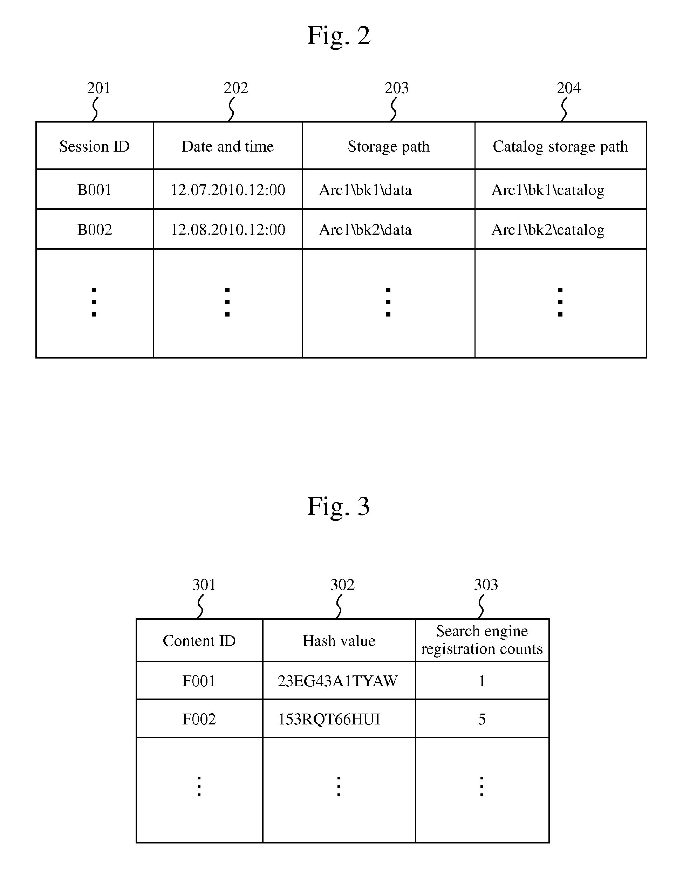

Fig. 2 is diagram showing an exemplary structure (in a table form) of the archiving management DB. The archiving management DB 114 has, as the attribute values that constitute the table, a session ID 201, a date and time 202, a storage path 203, and a catalog storage path 204.

The session ID 201 is an ID that is assigned to each archive session, and is used to identify the archive session. The date and time 202 are the date and time when the archive session was executed. The storage path 203 is the path where the archived data is stored in the archiving storage, and the catalog storage path 204 indicates the storage destination of catalog information, such as the directory structure of the archived data or the meta information on each file, in the archiving storage. With regard to the path, a path "Arc1\bk1\data" means a path "\bk1\data" on Arc1 of the archiving storage 104.

### <Duplicate Management DB>

Fig. 3 is a diagram showing an exemplary structure (in a table form) of the duplicate management DB. The duplicate management DB 113 has, as the attribute values that constitute the table, a content ID 301, a hash value 302, and search engine registration counts 303.

The content ID 301 is an ID that is unique to the content registered in the search engine 111. The hash value 302 is a hash value of a file containing content, and files having different content have different hash values 302. The search engine registration counts 303 indicate the number of times the content is registered in the search engine. For example, suppose a case where the backup repository (the group of virtual machine files 108) includes five files having the same content but having different file names. Then, when a search index for such a backup repository is constructed, five pieces of the same content are registered with different file names in the search engine. Therefore, the search engine registration counts 303 become "5."

### <Document Management Table>

Fig. 4 is a diagram showing an exemplary structure of a document management table included in the search index 112. The document management table has, as the attribute values that constitute the table, a document ID 401, an acquisition date and time 402, content 403, a meta information pointer 404, a file path 405, an ACL pointer 406, an update date and time 407, a size 408, an to-be-applied policy ID 409, an archive session ID 410, and an access control entry 411.

The document ID 401 is an ID number that is assigned to each file registered in the search engine. The acquisition date and time 402 are the date and time when the crawling service acquired data and registered the data in the search engine. The content 403 is the content of a text-extracted file. The meta information pointer 404 is the pointer information to a table having the meta information on each file stored therein.

In the meta information table for each file, the file path 405, which is an attribute, indicates the storage destination of the target file. The ACL pointer 406 is the pointer information to an access control list that is set in the file. The update date and time 407 are the last update date and time of the file. The size 408 is the file size. In addition, the to-be-applied policy ID 409 indicates the ID of a policy to be applied in accordance with the attribute of the file identified at the time of crawling. Further, the archive session ID 410 indicates, when the file is stored in the archiving storage in accordance with the to-be-applied policy, the session ID of the archiving process in which the file was stored. When the archiving management DB 114 is searched using such ID information as a key, it is possible to know the storage destinations of the archived data and the catalog data.

The access control list has stored therein list data on the access control entry 411. The access control entry 411 indicates the access authority and information on the access. For example, Everyone:R in Fig. 4 indicates that all users are given only read access right. Further, when full-control access right is given to only a specific user with a SID of 00011122233, the access right of the file is defined such that 000111222333:F is additionally entered.

### <Inverted Index Table>

Fig. 5 is a diagram showing an exemplary structure of an inverted index table included in the search index 112. The inverted index table has, as the attribute values that constitute the table, a keyword 501, a location information pointer 502, a document ID 503, and position information 504.

The keyword 501 is a keyword contained in a document. When a keyword is given to the search engine 111, an inverted index is searched for by the keyword, so that a document containing the keyword can be searched for. The location information pointer 502 is the pointer information to a table that has stored therein a group of documents containing each keyword and the position of the keyword in each document. The pointer information has, as the attributes, a document ID 503 for identifying a document containing a specified keyword, and position information 504 indicating the position of the keyword in the corresponding document, as a pair of the starting point and end point information.

### <Process of the Virtual Machine Mounting Module>

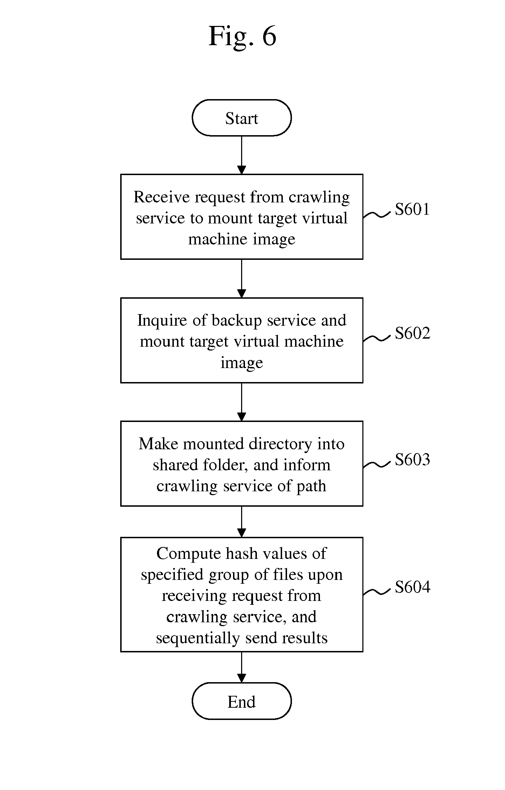

Fig. 6 is a flowchart illustrating a process of the virtual machine mounting module 106 performed at the time of crawling.

When a crawling process is performed, a mount request is issued from the crawling service 110, and the virtual machine mounting module 106, upon receiving the request to mount the target virtual machine image (step 601), inquires of the backup service and mounts the target virtual machine image (step 602).

Next, the virtual machine mounting module 106 makes the mounted directory into a shared folder, and informs the crawling service 110 of the access path to the shared folder (step 603). Accordingly, the directory mounted by the crawling service 110 becomes accessible.

Thereafter, the crawling service 110 performs crawling by accessing the shared folder using CIFS/NFS. At this time, the virtual machine mounting module 106 computes hash values of the specified group of files upon receiving a request from the crawling service 110, and sequentially informs the crawling service 110 of the results (step 604). Based on such hash values, the crawling service 110 determines if the files have already been registered in the search engine 111, and if the files have not been registered, downloads the data and proceeds with the registration process. This process can avoid downloading of duplicate data.

### <Process of the Crawling Service>

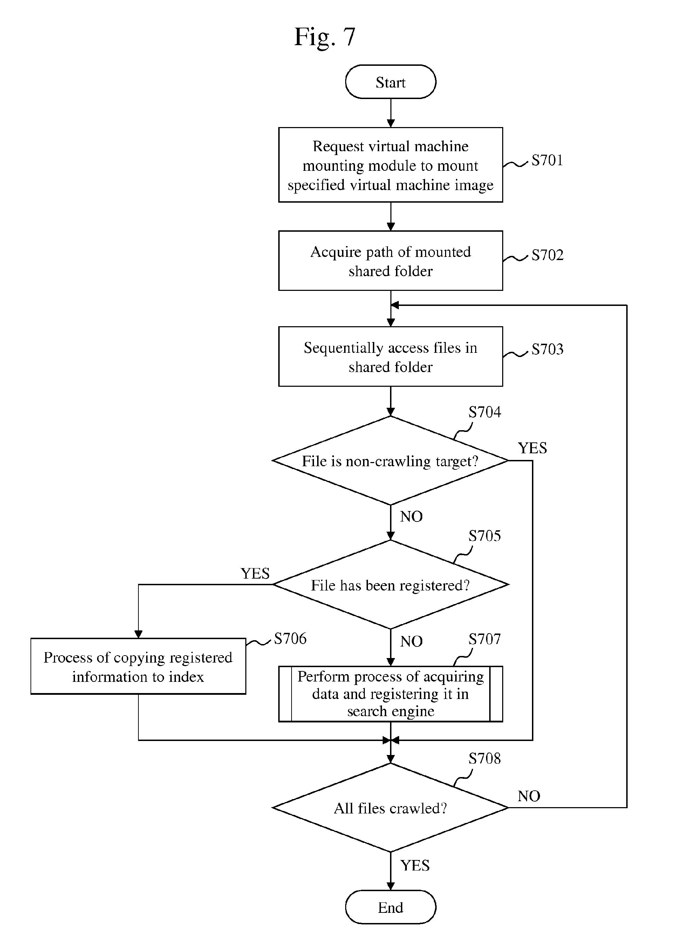

Fig. 7 is a flowchart illustrating a process of the crawling service 110 performed at the time of crawling.

First, the crawling service 110 transmits to the virtual machine mounting module 106 a request to mount a virtual machine image that is specified as a search index creation target (step 701). As described above (see Fig. 6), the virtual machine mounting module 106, upon receiving the request, mounts the specified virtual machine image and informs the crawling service 110 of the path of the shared folder that is mounted, so that the crawling service 110 acquires the path (step 702).

The crawling service 110 performs a crawling process by sequentially accessing files in the shared folder based on the noticed path (step 703).

The crawling service 110 determines if the accessed file is the non-crawling target (step 704). If the accessed file is the crawling target (if the result of step 704 is NO), the process proceeds to step 705, and if the accessed file is not the crawling target (if the result of step 704 is YES), the process proceeds to step 708. More specifically, there may be cases where the accessed file is the non-search-target file such as a system file of the OS or an application file. Thus, such a file is determined to be the non-crawling target. Such determination can be executed by performing a deNIST process using a list of a group of files of the OS and applications defined by the NIST.

In step 705, the crawling service 110 inspects whether the file has already been registered in the search engine 111 based on the hash value (step 705). If the file has been registered (if the result of step 705 is YES), the process proceeds to step 706. If the file has not been registered (if the result of step 705 is NO), the process proceeds to step 707.

In step 706, the crawling service 110 copies the registered information to the search index 112, and updates portions that are different in the meta information.

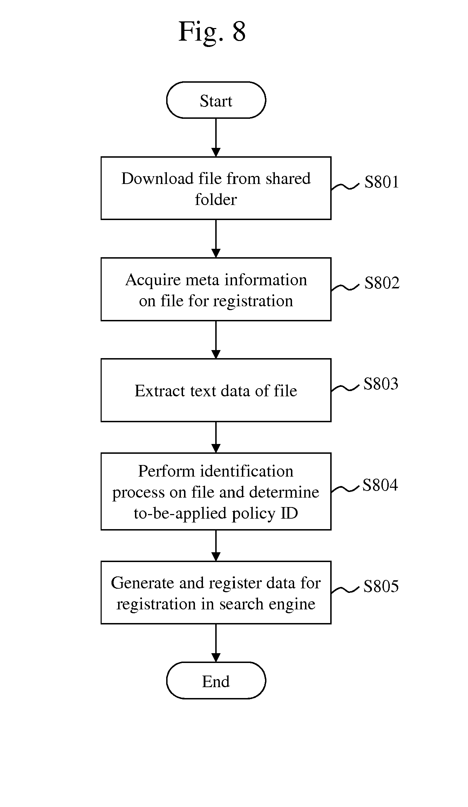

Meanwhile, in step 707, the crawling service 110 performs a process of acquiring the data and registering the data in the search engine (Fig. 8).

Then, the crawling service 110 checks if all of the target files have been crawled (step 708). The crawling process is sequentially repeated until all files in the shared folder are crawled.

### <Details of the Process of Acquiring Data and Registering the Data in the Search Engine>

Fig. 8 is a flowchart illustrating the details of the process of acquiring the data and registering the data in the search engine (step 707) in the crawling process.

First, the crawling service 110 downloads the target file to be crawled from the shared folder (step 801), and acquires the meta information on the file such as the file path or the update date and time of the file for registration (step 802).

Next, the crawling service 110 extracts the text data of the file (step 803) to perform an identification process on the file based on the extracted data (using the aforementioned known technology), and determines a to-be-applied policy ID corresponding to the policy to be applied (step 804).

Finally, the crawling service 110 generates data on a format for registration in the search engine, and registers the data in the search engine 111 (step 805).

### <Processing of Files>

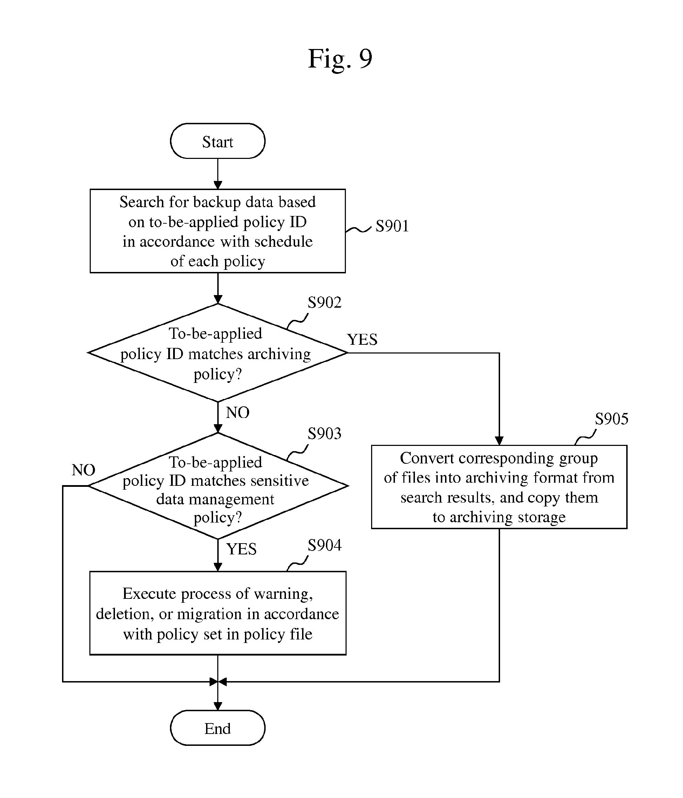

Fig. 9 is a flowchart illustrating processing of files executed by the backup management service 109 in accordance with a policy.

First, the backup management service 109 searches for backup data based on the to-be-applied policy ID in accordance with a schedule that is set in each policy, such as an archiving policy or a sensitive data detection policy (step 901).

Then, the backup management service 109 determines if the to-be-applied policy ID matches the archiving policy when searching for backup data using the to-be-applied policy ID (step 902).

If the to-be-applied policy ID is the ID of the archiving policy (if the result of step 902 is YES), the backup management service 109 makes a list of the corresponding group of files from the search results, converts it into an archiving format, and then stores it in the archiving storage (step 905). For example, when mail data is to be archived on a weekly basis, such a process is performed by searching for entries with a to-be-applied policy ID of mail archiving, creating data to be archived, and then storing the data in the archiving storage.

If the to-be-applied policy ID is not the ID of the archiving policy (if the result of step 902 is NO), the backup management service 109 further checks if the to-be-applied ID matches the ID of the sensitive data management policy (step 903).

If the to-be-applied policy ID matches the ID of the sensitive data management policy (if the result of step 903 is YES), the backup management service 109 performs a process of, for example, warning an administrator, deleting the data from the backup data, or moving the data to a specified secure storage in accordance with a process policy corresponding to the sensitive file set in the policy file (step 904).

If the to-be-applied policy ID does not match the ID of the sensitive data management policy (if the result of step 903 is NO), the process terminates.

Through the aforementioned configurations, it is possible to implement, in managing backed-up image data in a backup system for virtual machine images, a search for files included in the image as well as management of the data in accordance with a set policy such as an archiving policy or a sensitive data detection policy. In addition, although the backup data contains a large volume of duplicate files, it is possible to perform an efficient process in which such duplicates are taken into consideration, when creating or updating a search index.

### <Conclusion>

In the embodiment of the present invention, a virtual mounting module (a virtual machine mounting processing unit) backs up virtual machine images of a virtual server, and copies them to a group of virtual machine files (a repository of virtual machines). In addition, the virtual mounting module, in response to a mount request from a crawling service (a crawling processing unit), performs a process of mounting at least one virtual machine image stored in the group of virtual machine files. Then, the crawling service executes a crawling process to create a file search index by accessing the mounted virtual machine image. In addition, the backup management service executes a file operation on files included in the mounted virtual machine image. As described above, by realizing a mechanism of mounting a virtual machine image and performing search/file operations on the individual files stored therein, it becomes possible to search for/manage virtual machine image data in accordance with the content of the files stored therein.

The virtual machine mounting module, before sending files included in the virtual machine image, informs the crawling service of the hash values of the files. Then, the crawling service determines if files having the same content have already been acquired using the hash values, and acquires only files that have not been acquired yet. In addition, the crawling service acquires only the meta information on such files, and copies data from the already acquired files, and then registers it in the search index. Accordingly, a file having a different file name but having the same content need not be acquired again, and thus the efficiency of the process can be increased. It should be noted that in order to determine if files have already been acquired, a duplicate management DB for the data registered in the search engine is provided, so that a registration/update process is performed with reference to such a DB. Accordingly, an efficient process on the search index that is suitable for the backup data can be performed.

Further, a to-be-applied policy is provided to a file registered in the search index. This to-be-applied policy is the information that defines handling of the file in accordance with data contained in the file. Such a to-be-applied policy is provided to each file by executing, with the search engine, an identification process on a file acquired by the crawling service and thus identifying the data on the file. Then, the backup management service (the backup management processing unit) executes a predetermined file operation on the file contained in the virtual machine image that has been stored in the group of virtual machine files in accordance with the to-be-applied policy provided to the file registered in the search index. As described above, by setting a to-be-applied policy such as an archiving management policy or a sensitive data management policy by determining the content of a file in creating a search index, it becomes possible to perform data management in accordance with the policy of the backup data registered in the search engine.

The present invention can also be realized by a program code of software that implements the function of the embodiment. In such a case, a storage medium having recorded thereon the program code is provided to a system or a device, and a computer (or a CPU or a MPU) in the system or the device reads the program code stored in the storage medium. In this case, the program code itself read from the storage medium implements the function of the aforementioned embodiment, and the program code itself and the storage medium having stored thereon the program code constitute the present invention. As the storage medium for providing such a program code, for example, a flexible disk, CD-ROM, DVD-ROM, a hard disk, an optical disc, a magneto-optical disk, CD-R, a magnetic tape, a nonvolatile memory card, ROM, or the like is used.

Further, based on an instruction of the program code, an OS (operating system) running on the computer or the like may perform some or all of actual processes, and the function of the aforementioned embodiment may be implemented by those processes. Furthermore, after the program code read from the storage medium is written to the memory in the computer, the CPU or the like of the computer may, based on the instruction of the program code, perform some or all of the actual processes, and the function of the aforementioned embodiment may be implemented by those processes.

Moreover, the program code of the software that implements the function of the embodiment may be distributed via a network, and thereby stored in storage means such as the hard disk or the memory in the system or the device, or the storage medium such as CD-RW or CD-R, and at the point of use, the computer (or the CPU or the MPU) in the system or the device may read the program code stored in the storage means or the storage medium and execute the program code.

Finally, it should be appreciated that the process and technology described herein may be implemented substantially by any combination of components without being related to any specific device. Further, various types of general-purpose devices can be used in accordance with the teaching described herein. It may be found to be advantageous to construct a dedicated device to execute the steps of the method described herein. In addition, various inventions can be formed by combining a plurality of components disclosed in the embodiment as appropriate. For example, some components may be removed from the whole components shown in the embodiment. Further, the components in different embodiments may be appropriately combined. Although the present invention has been described with reference to specific examples, such examples are shown not for limiting purposes but for description purposes in all aspects. Those skilled in the art may appreciate that there are a number of combinations of hardware, software, and firmware that are suitable for implementing the present invention. For example, the software described herein may be implemented by an assembler or a wide range of programs or script languages such as C/C++, perl, Shell, PHP, or Java (registered trademark).

Further, in the aforementioned embodiment, the control lines and information lines represent those that are considered to be necessary for description purposes, and do not necessarily represent all control lines and information lines that are necessary for a product. In practice, all structures may be mutually connected.

In addition, those skilled in the art may appreciate that other implementations of the present invention are apparent from consideration of the specification and the embodiment of the present invention disclosed herein. Various configurations and/or components of the embodiment described herein can be used either alone or in any combination in a computerized storage system having a data management function. The specification and the specific examples are merely typical examples. The scope and spirit of the present invention are represented by the following claims.

### Reference Signs List

- 101: Virtual server
- 102: LAN
- 103: Backup server
- 104: Archiving storage
- 105: Backup management server
- 106: Virtual machine mounting module
- 107: Backup service
- 108: Group of virtual machine files
- 109: Backup management service
- 110: Crawling service
- 111: Search engine
- 112: Search index
- 113: Duplicate management DB
- 114: Archiving management DB
- 115: Policy file
- 201: Session ID
- 202: Date and time
- 203: Storage path
- 204: Catalog storage path
- 301: Content ID
- 302: Hash value
- 303: Search engine registration counts
- 401: Document ID
- 402: Acquisition date and time
- 403: Content
- 404: Meta information pointer
- 405: File path
- 406: ALC pointer
- 407: Update date and time
- 408: Size
- 409: To-be-applied policy ID
- 410: Archive session ID
- 411: Access control entry
- 501: Keyword
- 502: Location information pointer
- 503: Document ID
- 504: Position information

## Claims

1. An information processing system for managing backups of virtual machine images, comprising:
a virtual machine repository having stored therein virtual machine images that have been backed up;
a virtual machine mounting processing unit configured to back up virtual machine images of a virtual server, copy the virtual machine images to the virtual machine repository, and mount at least one of the virtual machine images stored in the virtual machine repository; and
a crawling processing unit configured to execute a crawling process to create a file search index by accessing the mounted virtual machine image,
wherein the virtual machine mounting processing unit is configured to mount the virtual machine image in response to a request from the crawling processing unit.

2. The information processing system according to claim 1, wherein
the virtual machine mounting processing unit is configured to inform the crawling processing unit of a hash value of a file included in the virtual machine image, and
the crawling processing unit is configured to determine if a file with the same content has already been downloaded and registered using the hash value, and download only a file that has not been registered.

3. The information processing system according to claim 2, further comprising a search engine configured to create a search index of a target file included in the virtual machine image, wherein
the crawling processing unit is configured to acquire, for a registered file, only meta information on the target file from the virtual machine mounting processing unit, and
the search engine is configured to create the search index by copying data on the registered file and updating the data with the acquired meta information.

4. The information processing system according to claim 3, wherein the search engine is configured to execute an identification process on the file acquired by the crawling processing unit to identify content of data on the file, and provide to the search index a to-be-applied policy that matches the content of the data included in the file and that defines handling of the file in accordance with the content of the data.

5. The information processing system according to claim 4, further comprising a backup management processing unit configured to execute a predetermined file operation on a file included in the virtual machine image stored in the virtual machine repository in accordance with the to-be-applied policy provided to the file registered in the search index.

6. A backup management method for an information processing system that manages backups of virtual machine images, the information processing system including a virtual machine repository having stored therein virtual machine images that have been backed up, a virtual machine mounting processing unit, and a crawling processing unit, the backup management method comprising:
backing up, with the virtual machine mounting processing unit, virtual machine images of a virtual server, and copying the virtual machine images to the virtual machine repository;
mounting, with the virtual machine mounting processing unit, at least one of the virtual machine images stored in the virtual machine repository in response to a request from the crawling processing unit; and
executing, with the crawling processing unit, a crawling process to create a file search index by accessing the mounted virtual machine image.

7. The backup management method according to claim 6, further comprising:
informing, with the virtual machine mounting processing unit, the crawling processing unit of a hash value of a file included in the virtual machine image; and
determining, with the crawling processing unit, if a file with the same content has already been downloaded and registered using the hash value, and downloading only a file that has not been registered.

8. The backup management method according to claim 7, wherein
the information processing system further includes a search engine configured to create a search index of a target file included in the virtual machine image, and
the method further comprises:
acquiring, with the crawling processing unit, only meta information on the target file from the virtual machine mounting processing unit, for a registered file; and
creating, with the search engine, the search index by copying data on the registered file and updating the data with the acquired meta information.

9. The backup management method according to claim 8, further comprising:
executing, with the search engine, an identification process on the file acquired by the crawling processing unit to identify content of data on the file; and
providing, with the search engine, a to-be-applied policy that matches the content of the data included in the file and that defines handling of the file to the search index in accordance with the content of the data.

10. The information processing system according to claim 9, wherein
the information processing system further includes a backup management processing unit, and
the method further comprises:
executing, with the backup management processing unit, a predetermined file operation on a file included in the virtual machine image stored in the virtual machine repository in accordance with the to-be-applied policy provided to the file registered in the search index.

11. A program for executing backup management in an information processing system that manages virtual machine images, the program being configured to cause at least one computer to execute:
a process of backing up virtual machine images of a virtual server, and copying the virtual machine images to the virtual machine repository;
a process of mounting at least one of the virtual machine images stored in the virtual machine repository; and
a process of executing a crawling process to create a file search index by accessing the mounted virtual machine image.

## Amended claims

### Amended claims under Art. 19.1 PCT

**1.** (Amended) An information processing system for managing backups of virtual machine images, comprising:
a virtual machine repository having stored therein virtual machine images that have been backed up;
a virtual machine mounting processing unit configured to back up virtual machine images of a virtual server, copy the virtual machine images to the virtual machine repository, and mount at least one of the virtual machine images stored in the virtual machine repository; and
a crawling processing unit configured to execute a crawling process to create a file search index by accessing the mounted virtual machine image,
wherein the virtual machine mounting processing unit is configured to mount the virtual machine image in response to a request from the crawling processing unit,
the virtual machine mounting processing unit is configured to inform the crawling processing unit of a hash value of a file included in the virtual machine image, and
the crawling processing unit is configured to determine if a file with the same content has already been downloaded and registered using the hash value, and download only a file that has not been registered.

**2.** (Canceled)

**3.** (Amended) The information processing system according to claim 1, further comprising a search engine configured to create a search index of a target file included in the virtual machine image, wherein
the crawling processing unit is configured to acquire, for a registered file, only meta information on the target file from the virtual machine mounting processing unit, and
the search engine is configured to create the search index by copying data on the registered file and updating the data with the acquired meta information.

**4.** The information processing system according to claim 3, wherein the search engine is configured to execute an identification process on the file acquired by the crawling processing unit to identify content of data on the file, and provide to the search index a to-be-applied policy that matches the content of the data included in the file and that defines handling of the file in accordance with the content of the data.

**5.** The information processing system according to claim 4, further comprising a backup management processing unit configured to execute a predetermined file operation on a file included in the virtual machine image stored in the virtual machine repository in accordance with the to-be-applied policy provided to the file registered in the search index.

**6.** (Amended) A backup management method for an information processing system that manages backups of virtual machine images, the information processing system including a virtual machine repository having stored therein virtual machine images that have been backed up, a virtual machine mounting processing unit, and a crawling processing unit, the backup management method comprising:
backing up, with the virtual machine mounting processing unit, virtual machine images of a virtual server, and copying the virtual machine images to the virtual machine repository;
mounting, with the virtual machine mounting processing unit, at least one of the virtual machine images stored in the virtual machine repository in response to a request from the crawling processing unit;
executing, with the crawling processing unit, a crawling process to create a file search index by accessing the mounted virtual machine image;
informing, with the virtual machine mounting processing unit, the crawling processing unit of a hash value of a file included in the virtual machine image; and
determining, with the crawling processing unit, if a file with the same content has already been downloaded and registered using the hash value, and downloading only a file that has not been registered.

**7.** (Canceled)

**8.** (Amended) The backup management method according to claim 6, wherein
the information processing system further includes a search engine configured to create a search index of a target file included in the virtual machine image, and
the method further comprises:
acquiring, with the crawling processing unit, only meta information on a target file from the virtual machine mounting processing unit, for a registered file; and
creating, with the search engine, the search index by copying data on the registered file and updating the data with the acquired meta information.

**9.** The backup management method according to claim 8, further comprising:
executing, with the search engine, an identification process on the file acquired by the crawling processing unit to identify content of data on the file; and
providing, with the search engine, a to-be-applied policy that matches the content of the data included in the file and that defines handling of the file to the search index in accordance with the content of the data.

**10.** The information processing system according to claim 9, wherein
the information processing system further includes a backup management processing unit, and
the method further comprises:
executing, with the backup management processing unit, a predetermined file operation on a file included in the virtual machine image stored in the virtual machine repository in accordance with the to-be-applied policy provided to the file registered in the search index.

**11.** (Amended) A program for executing backup management in an information processing system that manages virtual machine images, the program being configured to cause at least one computer to execute:
a process of backing up virtual machine images of a virtual server, and copying the virtual machine images to the virtual machine repository;
a process of mounting at least one of the virtual machine images stored in the virtual machine repository;
a process of executing a crawling process to create a file search index by accessing the mounted virtual machine image; and
a process of acquiring a hash value of a file included in the virtual machine image, determining if a file with the same content has already been downloaded and registered using the hash value, and downloading only a file that has not been registered.
